# FASCICULE DE BREVET EUROPEEN

(11) **EP 1 047 566 B1**
(45) Date de publication et mention de la délivrance du brevet: **27.03.2002**
(21) Numéro de dépôt: 98965845.5
(22) Date de dépôt: 16.12.1998
(51) Int. Cl.: B60C 15/06

(54) **BOURRELET DE PNEUMATIQUE AVEC ELEMENTS DE RENFORT CIRCONFERENTIELS**
REIFENWULST MIT IN UMFANGSRICHTUNG GERICHTETEN FESTIGKEITSTRÄGERN
TYRE BEAD WITH CIRCUMFERENTIAL REINFORCING ELEMENTS

(30) Priorité: 12.01.1998 FR 9800293
(43) Date de publication de la demande: 02.11.2000
(73) Titulaire: Compagnie Générale des Etablissements Michelin - Michelin, 63040 Clermont-Ferrand Cedex 09 (FR)
(72) Inventeur: AUXERRE, Pascal, F-63130 Royat (FR)
(74) Mandataire: Devaux, Edmond-Yves
(86) Numéro de dépôt international: EP9808262
(87) Numéro de publication internationale: WO9934990

(56) Documents cités:
- FR-A- 2 348 828
- FR-A- 2 604 396
- FR-A- 2 730 190
- US-A- 4 508 152
- PATENT ABSTRACTS OF JAPAN vol. 010, no. 163 (M-487), 11 juin 1986 & JP 61 016106 A (SUMITOMO GOMU KOGYO KK), 24 janvier 1986
- PATENT ABSTRACTS OF JAPAN vol. 096, no. 010, 31 octobre 1996 & JP 08 150813 A (YOKOHAMA RUBBER CO LTD:THE), 11 juin 1996

## Description

La présente invention concerne un pneumatique à armature de carcasse radiale destiné à porter de lourdes charges, et plus particulièrement un pneumatique de type "Poids Lourds", destiné à équiper des véhicules tels que, par exemple, les camions, tracteurs routiers, autobus, remorques et autres, et plus particulièrement la nouvelle structure de renforcement des bourrelets dudit pneumatique.

En général, un pneumatique du type considéré comprend une armature de carcasse formée d'au moins une nappe de câbles métalliques, ancrée dans chaque bourrelet à au moins une tringle, en formant un retournement. L'armature de carcasse est radialement surmontée d'une armature de sommet, composée d'au moins deux nappes de câbles métalliques, croisés d'une nappe à la suivante en formant avec la direction circonférentielle des angles compris entre 10° et 45°. Les retournements d'armature de carcasse sont généralement renforcés par au moins une nappe de renforcement de bourrelet formée de câbles métalliques orientés à un faible angle par rapport à la direction circonférentielle, compris généralement entre 10° et 30°.

Dans le cas de la présence d'une seule nappe de renforcement de bourrelet, cette dernière est généralement située axialement à l'extérieur, le long du retournement d'armature de carcasse, avec une extrémité radialement supérieure située au dessus ou au dessous de l'extrémité radialement supérieure du retournement d'armature de carcasse. Quant à l'extrémité radialement inférieure d'une telle nappe de renforcement, elle est généralement située sous une droite parallèle à l'axe de rotation et passant approximativement par le centre de gravité de la section méridienne de la tringle d'ancrage de l'armature de carcasse.

La solution connue a pour but d'éviter la déradialisation des câbles du retournement de l'armature de carcasse, ainsi que de minimiser les déformations radiales et circonférentielles subies par l'extrémité dudit retournement, et par la couche de caoutchouc extérieure recouvrant le bourrelet et assurant la liaison avec la jante.

La durée de vie des pneumatiques "Poids-Lourds", du fait des progrès accomplis, du fait que certains roulages sont rendus moins pénalisants en ce qui concerne l'usure de la bande de roulement, est devenue telle qu'il est encore nécessaire d'améliorer l'endurance des bourrelets. Ladite amélioration doit porter sur la dégradation des couches de caoutchouc au niveau des extrémités de retournement d'armature de carcasse et extrémités radialement extérieures des nappes de renforcement de bourrelets. Plus particulièrement dans le cas de pneumatiques soumis à des roulages prolongés, roulages induisant souvent une température élevée des bourrelets, du fait des températures atteintes par les jantes de montage, les mélanges de caoutchouc en contact avec la jante sont alors sujets à une diminution de leurs rigidités, ainsi qu'à une oxydation plus ou moins lente, d'où une tendance très marquée de l'armature de carcasse à se dérouler autour de la tringle sous l'effet de la pression de gonflage intérieure, malgré la présence d'une ou plusieurs nappes de renforcement de bourrelets. Prennent alors naissance des mouvements de tringle, des déformations de cisaillement à toutes les extrémités de nappes, pour aboutir à la destruction du bourrelet.

Ladite amélioration doit aussi, et principalement, porter sur cette deuxième possibilité de dégradation.

L'armature de carcasse d'un pneumatique radial, monté sur sa jante de service et gonflé à la pression recommandée, a dans un flanc un profil méridien régulièrement convexe entre approximativement les zones de raccordement avec le profil méridien de l'armature de sommet et avec le bourrelet. En particulier, à partir du rayon où l'armature de carcasse subit l'influence de la(des) nappe(s) de renforcement de bourrelets, ladite armature possède dans le bourrelet un profil méridien soit sensiblement rectiligne soit incurvé dans le sens opposé à la courbure dans les flancs, c'est-à-dire sensiblement parallèle à la courbure des rebords de jante à partir d'un point d'inflexion situé radialement approximativement au niveau de l'extrémité radialement supérieure de la nappe de renforcement de bourrelet placée le long du retournement d'armature de carcasse.

Un tel profi1 méridien d'armature de carcasse ne semble pas propice à une bonne endurance des bourrelets, qui se doit d'être améliorée lorsque les charges supportées deviennent supérieures ou les pressions de gonflage inférieures aux charges et pressions recommandées.

Le brevet FR 2 604 396, correspondant au préambule de la revendication 1, en vue d'améliorer la durabilité d'un bourrelet de pneumatique radial destiné à un roulage intensif, propose le renforcement de la partie principale de l'armature de carcasse par deux armatures de renforcement de bourrelets : l'une, située axialement à l'extérieur de l'armature de carcasse, étant formée de couches de câbles métalliques inclinés par rapport à la direction méridienne, l'autre, située axialement à l'intérieur de l'armature de carcasse, étant aussi formée de couches de câbles métalliques inclinés dans le sens opposé au sens d'inclinaison des câbles des premières couches, de manière à obtenir avec les câbles radiaux de l'armature de carcasse une armature globale triangulée.

Les recherches de la demanderesse ont permis d'arriver à la conclusion que le profil méridien d'armature de carcasse dans la région du changement de courbure dans le bourrelet devait être renforcé par au moins une armature de renforcement de bourrelet d'éléments de renforcement circonférentiels.

Afin d'améliorer l'endurance des bourrelets d'un pneumatique, pour véhicule destiné à porter de lourdes charges, ledit pneumatique, conforme à l'invention, comprenant au moins une armature de carcasse radiale, formée d'au moins une nappe d'éléments de renforcement inextensibles et ancrée dans chaque bourrelet B à une tringle pour former un retournement, chaque bourrelet B étant renforcé par au moins une armature additionnelle de renforcement formée d'éléments métalliques, la partie non retournée de l'armature de carcasse, dans la région de bourrelet située de part et d'autre du point d'inflexion, où le tracé de son profil méridien change de courbure pour devenir rectiligne ou concave, étant renforcée, au moins axialement à l'intérieur, par une armature additionnelle de renforcement d'au moins une nappe formée d'éléments de renforcement métalliques, dont l'extrémité radialement inférieure est radialement au dessous de la droite D', parallèle à l'axe de rotation et passant par le point de la couche d'enrobage de la tringle d'ancrage radialement le plus éloigné de l'axe de rotation, mais au dessus de la droite D, parallèle à l'axe de rotation et passant par le point de la couche d'enrobage de la tringle d'ancrage radialement le plus proche de l'axe de rotation, et dont l'extrémité radialement supérieure est située à une distance radiale de la droite D, comprise entre une quantité égale à la demi-distance radiale entre les droites D et D" augmentée de la demi-distance radiale entre les droites D etD' et une quantité égale à la demi-distance entre les droites D et D" diminuée de la demi-distance radiale entre les droites D etD', la droite D" étant la droite de plus grande largeur axiale, est caractérisé en ce que les éléments de renforcement de l'armature additionnelle sont des tronçons ou des ensembles de tronçons de câbles circonférentiels, de longueur circonférentielle comprise entre 0,2 et 0,4 fois la longueur circonférentielle de l'armature de renforcement (6A), mesurée à la pose de ladite nappe.

La droite D" de plus grande largeur axiale est, par définition, la droite parallèle à l'axe de rotation et passant par le point du profil méridien d'armature de carcasse correspondant au point de plus grande largeur axiale lorsque le pneumatique est monté sur sa jante de service et gonflé à la pression recommandée et non chargé.

Les éléments de l'armature additionnelle de renforcement sont dits circonférentiels si l'angle qu'ils forment avec la directioncirconférentielle est compris entre + 5° et - 5°.

Cette structure permet ainsi une reprise partielle des efforts de tension subis par l'armature de carcasse, et ainsi minimise les déformations radiales en extrémités de retournement d'armature de carcasse, quelles que soient les conditions de roulage.

La reprise des efforts sera d'autant plus importante que les éléments de renforcement de l'armature additionnelle sont parallèles entre eux dans la(les) nappe(s) additionnelle(s) et jointifs sur toute la largeur de l'armature de renforcement Des éléments de renforcement sont dits jointifs, si, dans la direction perpendiculaire aux dits éléments, la distance séparant deux éléments adjacents est réduite au maximum.

La présence d'une deuxième armature additionnelle de renforcement de bourrelet située axialement à l'extérieur du retournement d'armature de carcasse est particulièrement bénéfique pour l'endurance des bourrelet en roulage sous forte surcharge. Ladite deuxième armature additionnelle sera préférentiellement formée d'au moins une nappe d'éléments de renforcement métalliques faisant avec la direction circonférentielle un angle pouvant être compris entre 0° et 30°, la valeur de 0° étant incluse dans l'intervalle considéré.

La reprise des efforts de tension méridienne d'une armature de carcasse est connue en soi par de nombreux documents. Le brevet FR 750 726 de la demanderesse enseigne le collage des nappes d'armature de carcasse à des armatures auxiliaires, chacune formée de fil enroulé en spirale et présentant en conséquence une flexibilité notable dans le sens transversal. Ledit collage est réalisé de sorte que deux nappes d'armature de carcasse enserrent une armature auxiliaire, ledit enserrement se faisant en l'absence de tringle et de retournement d'armature de carcasse.

Le brevet FR 1 169 474 enseigne aussi de supprimer la tringle usuellement employée par des petites nappes de fils ou câbles métalliques inclinées sur le parallèle d'accrochage, l'angle d'inclinaison pouvant descendre jusqu'à 5°, la (les) nappe(s) d'armature de carcasse étant retournées on non.

Le brevet FR 1 234 995 prévoit le remplacement des éléments de renforcement usuellement obliques de la(des) nappe(s) de renforcement de bourrelet destinée(s) à réduire les mouvements de l'accrochage contre le rebord de jante, par des éléments circonférentiels, l'armature de renforcement pouvant être disposée entre la partie principale de l'armature de carcasse et le retournement de ladite armature, ou axialement à l'extérieur dudit retournement d'armature de carcasse.

Nous retrouvons les mêmes armatures de renforcement de bourrelet à éléments circonférentiels dans le brevet FR 1 256 432, les dits éléments étant destinés à la reprise dans son intégralité des efforts de tension d'armature de carcasse, et dans le cas de pneumatiques pour véhicules de tourisme, en l'absence de tringles d'ancrage ou de toute autre nappe de renforcement.

Le document FR 2 055 988 décrit un certain nombre d'applications possibles d'une armature de renforcement de bourrelet à éléments circonférentiels, en particulier l'utilisation d'une telle armature au lieu et place de l'armature usuelle à éléments obliques disposés axialement à l'extérieur du retournement d'armature de carcasse.

Le brevet FR 2 730 190, afin d'améliorer l'endurance des bourrelets d'un pneumatique, propose le renforcement des dits bourrelets par au moins une nappe additionnelle de câbles métalliques circonférentiels enroulée autour de la tringle d'ancrage d'armature de carcasse, et dont les deux brins axialement intérieur et extérieur sont situés au-dessus d'une droite parallèle à l'axe de rotation et passant par le point de la tringle le plus éloigné dudit axe.

Non seulement la combinaison du profil méridien d'armature de carcasse à points d'inflexion dans les bourrelets avec la présence d'une armature de renforcement de bourrelet, à éléments circonférentiels, et disposée à l'intérieur de la partie non retournée de l'armature de carcasse, permet l'amélioration de l'endurance des bourrelets, mais elle permet en outre d'obtenir une très nette diminution du poids d'un pneumatique tout en n'altérant pas ses propriétés, lorsque l'on combine la présence d'une armature de renforcement de bourrelet, décrite ci-dessus, au remplacement de la tringle à fils métalliques rectangulaires, généralement utilisée dans le type de pneumatique considéré, par une tringle plus économique de type tressé, c'est-à-dire formée d'un tressage hélicoïdal de plusieurs fils métalliques, ou une tringle de type paquet à section polygonale, c'est-à-dire une tringle obtenue par l'enroulement sur une forme d'un fil métallique conduisant à plusieurs couches de différentes largeurs. Les types de tringle ci-dessus permettent un moindre encombrement du fait de la forme de leur section transversale et de la diminution possible de ladite section, respectivement de l'ordre de 30 % et 50 %, ce qui conduit par rapport à l'application de l'invention au cas d'une tringle à fils rectangulaires plus encombrante, à avoir une épaisseur de bourrelet plus amincie.

L'armature de renforcement de bourrelet ainsi décrite peut être réalisée séparément par enroulement en spirale sur un support horizontal de forme appropriée, et ensuite transférée sur l'ébauche de pneumatique nonvulcanisée. La fabrication d'un tel pneumatique sera cependant avantageusement facilitée par l'emploi, à titre d'éléments de renforcement, de tronçons ou d'ensembles ou groupes de tronçons de câbles, de longueur circonférentielle comprise entre 0,2 et 0,4 fois la longueur circonférentielle de l'armature de renforcement, ce qui permet la pose de l'armature de renforcement de bourrelet sur le tambour de confection de l'ébauche crue d'armature de carcasse et la mise sous forme torique de la dite ébauche sans difficultés majeures, et ladite longueur moyenne étant mesurée à la pose sur ledit tambour de confection. Les interstices ou coupures circonférentielles entre éléments coupés seront préférentiellement décalés les uns par rapport aux autres.

Il en est de même de la deuxième armature additionnelle, axialement à l'extérieur du retournement d'armature de carcasse, lorsque cette dernière peut être formée d'éléments métalliques à 0°, lesdits éléments étant alors avantageusement des tronçons ou des ensembles de tronçons de câbles, de longueur circonférentielle comprise entre 0,2 et 0,4 fois la longueur circonférentielle moyenne de la nappe de renforcement.

Les caractéristiques de l'invention seront mieux comprises à l'aide de la description qui suit et qui se réfère au dessin, illustrant à titre non limitatif des exemples d'exécution, et sur lequel la figure unique 1 représente schématiquement une structure de pneumatique, conforme à l'invention.

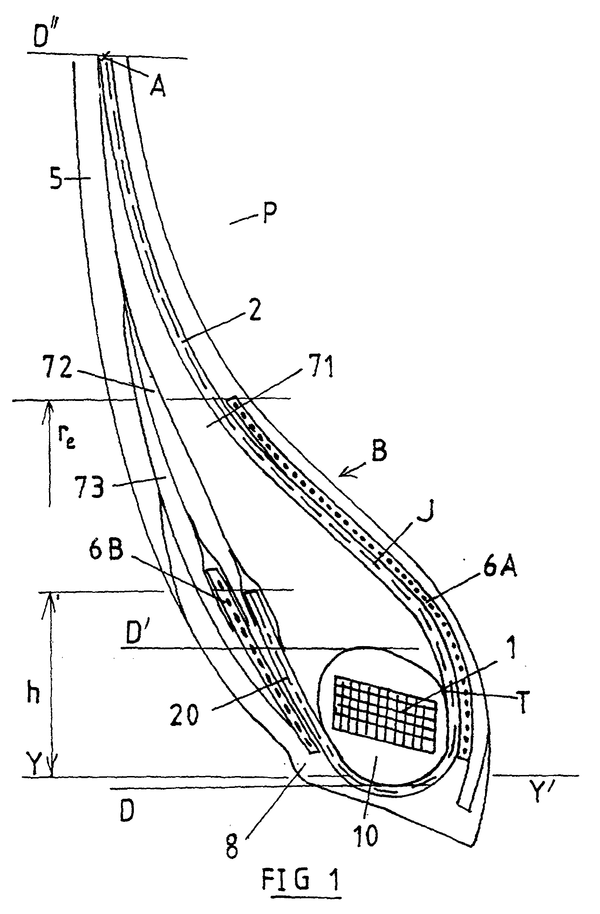

Le pneumatique P représenté sur la figure 1 est un pneumatique de dimension 315/80 R 22,5, destiné à être monté sur une jante comportant des sièges de jante J inclinés à 15°. Ledit pneumatique comprend une bande de roulement 4 (non montrée) réunie à deux bourrelets B par l'intermédiaire de deux flancs 5. Chaque bourrelet B est renforcé par une tringle 1 formée par l'enroulement sur une forme appropriée d'un fil à section quadrilatère jusqu'à obtention de plusieurs rangées de fils radialement juxtaposées. Autour de ladite tringle 1 est ancrée une armature de carcasse 2, composée d'une seule nappe de câbles métalliques. L'armature de carcasse 2 possède, vue en section méridienne, un profil méridien, entre le point A de plus grande largeur axiale et le point de tangence T dudit profil avec la couche d'enrobage 10 quasi-circulaire de la tringle 1 (il est écrit quasi circulaire parce que la couche d'enrobage n'a pratiquement jamais une forme transversale parfaitement circulaire), présentant deux courbures : le profil est convexe du point A au point J d'inflexion situé radialement au-dessus de la tringle, et il est concave dudit point d'inflexion J jusqu'au point T de tangence.

L'ancrage de l'armature de carcasse se fait par un retournement 20 autour de la couche 10 de mélange caoutchouteux qui recouvre la tringle 1, la distance radiale h, séparant l'extrémité radialement supérieure dudit retournement 20 de la droite YY' parallèle à l'axe de rotation et définissant le diamètre nominal du bourrelet (qui est le même, dans le cas décrit, que le diamètre de la jante de service) étant égale, dans l'exemple étudié du pneumatique de dimension 315/80 R 22,5, à 37 mm.

Entre l'armature de carcasse 2 et son retournement 20, radialement au dessus de la tringle 1, est disposé un bourrage tringle 71 en mélange caoutchouteux de dureté Shore généralement élevée. Le bourrelet B du pneumatique, conforme à l'invention, est renforcé par une première armature additionnelle de renforcement 6A composée d'une nappe d'éléments à haut module d'élasticité et disposés circonférentiellement, ladite nappe 6A étant située axialement à l'intérieur de la partie non retournée ou principale de l'armature de carcasse 2, dans la région située de part et d'autre du point d'inflexion J où le profil méridien d'armature de carcasse change de courbure. Les éléments de renforcement de la nappe 6A sont des câbles 27 x 23. métalliques coupés, la longueur desdits éléments ou tronçons de câbles étant égale au quart de la longueur circonférentielle de ladite nappe 6A, mesurée lors de sa pose sur le tambour de confection de l'ébauche d'armature de carcasse, et les espaces entre extrémités d'éléments sont de faible amplitude : 3 mm (mesurés aussi lors de la pose) et sont décalés circonférentiellement entre eux. L'extrémité radialement inférieure de la nappe 6A est sensiblement disposée sur une droite parallèle à l'axe de rotation et passant par le point de la tringle 1 le plus proche de l'axe de rotation, point qui est situé à une distance de l'axe de rotation de 290 mm, comprise entre la distance de 280 mm séparant de l'axe de rotation la droite D passant par le point de la couche d'enrobage 10 de la tringle d'ancrage 1 le plus proche de l'axe de rotation et la distance de 305 mm séparant de l'axe de rotation la droite D' passant par le point de la couche d'enrobage 10 le plus éloigné dudit axe de rotation.

Quant à l'extrémité radialement supérieure, elle est située radialement, dans le cas décrit, à une distance rₑ de l'axe de rotation égale à 335 mm, quantité qui est comprise entre une quantité de 357,5 mm, égale à la demi-somme 345 mm des distances respectives à l'axe de rotation des droites D et D" (410 + 280)/2, la droite D" de plus grande largeur axiale passant par le point A étant à 410 mm de l'axe de rotation, augmentée de la demi-distance radiale de 12,5 mm entre les droites D et D' (305- 280)/2, et une quantité de 332,5 mm, égale à la demi-somme 345 mm des distances respectives à l'axe de rotation des droites D et D" diminuée de la demi-distance radiale de 12,5 mm entre les droites D et D'.

Le bourrelet B est en outre renforcé axialement à l'extérieur du retournement 20 de l'armature de carcasse 2 par une deuxième armature additionnelle 6B, composée d'une nappe de câbles métalliques 27x23 continus, parallèles entre eux dans la nappe 6B et faisant avec la direction circonférentielle un angle plus grand que 0° et précisément égal à 22°. L'extrémité radialement extérieure de cette deuxième nappe additionnelle 6B est située radialement au-dessus de l'extrémité du retournement 20 d'armature de carcasse 2, alors que son extrémité radialement inférieure est pratiquement située sur la même droite, parallèle à l'axe de rotation, et où est située l'extrémité radialement inférieure de la première nappe additionnelle 6A. La dite nappe 6B est d'une part séparée de l'armature de carcasse 2 et du bourrage tringle 71 par un deuxième bourrage 72 de remplissage et d'autre part séparée du mélange caoutchouteux de protection 8, qui entoure le bourrelet B, par un troisième bourrage 73.

Des pneumatiques tels que décrits ci-dessus, et dits P_{AB}, ont été d'une part comparés :
- à des pneumatiques usuels P_{A}, c'est à dire avec des bourrelets ne comprenant qu'une seule nappe additionnelle de renforcement 6B de bourrelet, ladite une nappe étant formée de câbles métalliques continus orientés à 22° par rapport à la direction circonférentielle et disposée axialement à l'extérieur du retournement d'armature de carcasse,
- à des pneumatiques P_{T} ne comprenant dans les bourrelets aucune nappe d'armature additionnelle,
- à des pneumatiques P_{B} avec des bourrelets ne comprenant qu'une seule nappe additionnelle de renforcement 6A de bourrelet, ladite une nappe étant formée de tronçons de câbles métalliques orientés circonférentiellement, et disposée axialement à l'intérieur de l'armature de carcasse.

La comparaison s'est réalisée sur deux critères de qualité, fondamentaux pour l'endurance des bourrelets de pneumatiques : endurance sous surcharge, et l'endurance sur jante chauffante. Dans les mêmes conditions de roulage pour toutes les enveloppes testées, les pneumatiques P_{T} font en moyenne (2 testés par catégorie) 24 000 km en roulage surchargé et 2 600 km en roulage jante chauffante. Les pneumatiques P_{B} à une seule nappe de tronçons à 0° font respectivement 101 000 km et 8 100 km dans les mêmes roulages , ce qui représente un gain remarquable quel que soit le type de roulage. Les pneumatiques P_{A}, qui sont des pneumatiques usuels, ont réalisé respectivement dans les deux tests 53 000 km et 5 200 km, alors que les pneumatiques P_{AB}, tels que décrits ci-dessus, ont réalisé 156 000 km et 8 200 km respectivement dans les deux roulages considérés. Ces résultats, qui représentent un progrès considérable et pour le moins inattendu, mettent parfaitement en lumière l'effet de la présence d'une nappe de renforcement additionnelle d'éléments métalliques circonférentiels discontinus et axialement à l'intérieur de l'armature de carcasse, combinée à la présence d'une nappe de renforcement additionnelle d'éléments métalliques continus faisant avec la direction circonférentielle un angle faible et axialement à l'extérieur du retournement d'armature de carcasse.

## Revendications

1. Pneumatique, comprenant au moins une armature de carcasse radiale (2), formée d'au moins une nappe d'éléments de renforcement inextensibles (2) et ancrée dans chaque bourrelet B à une tringle (1) pour former un retournement (20), chaque bourrelet B étant renforcé par une armature additionnelle de renforcement (6) formée d'éléments métalliques, la partie non retournée de l'armature de carcasse (2), dans la région de bourrelet située de part et d'autre du point d'inflexion où le tracé de son profil méridien change de courbure pour devenir rectiligne ou concave, étant renforcée, au moins axialement à l'intérieur, par une armature additionnelle de renforcement (6A) d'au moins une nappe (6A), formée d'éléments de renforcement métalliques, dont l'extrémité radialement inférieure est radialement au dessous de la droite D', parallèle à l'axe de rotation et passant par le point de la couche d'enrobage (10) de la tringle d'ancrage (1)radialement le plus éloigné de l'axe de rotation, mais au dessus de la droite D, parallèle à l'axe de rotation et passant par le point de la couche d'enrobage (10) de la tringle d'ancrage (1) radialement le plus proche de l'axe de rotation, et dont l'extrémité radialement supérieure est située à une distance radiale de la droite D, comprise entre une quantité égale à la demi-distance radiale entre les droites D et D" augmentée de la demi-distance radiale entre les droites D et D' et une quantité égale à la demi-distance radiale entre les droites D et D" diminuée de la demi-distance radiale entre les droites D et D', la droite D" étant la droite de plus grande largeur axiale, **caractérisé en ce que** les éléments de renforcement de l'armature additionnelle sont des tronçons ou des ensembles de tronçons de câbles circonférentiels, de longueur circonférentielle comprise entre 0,2 et 0,4 fois la longueur circonférentielle de l'armature de renforcement (6A), mesurée à la pose de ladite nappe.

2. Pneumatique selon la revendication 1, **caractérisé en ce que** les interstices ou coupures circonférentielles entre tronçons coupés sont décalés les uns par rapport aux autres.

3. Pneumatique selon l'une des revendications 1 à 2, **caractérisé en ce qu'**au moins un bourrelet B est renforcé par une deuxième armature additionnelle (6B) de renforcement, située axialement à l'extérieur du retournement (20) d'armature de carcasse (2), et composée d'au moins une nappe (6B) formée d'éléments de renforcement métalliques faisant avec la direction circonférentielle un angle pouvant être compris entre 0° et 30°, la valeur de 0° étant incluse dans l'intervalle considéré.

4. Pneumatique selon la revendication 3, **caractérisé en ce que** la (les) nappe(s) (6B) est(sont) formée(s) d'éléments métalliques en acier continus et faisant avec la direction circonférentielle un angle plus grand que 0°.

5. Pneumatique selon l'une des revendications 1 à 4, **caractérisé en ce que** la tringle d'ancrage (1) de l'armature de carcasse (2) est une tringle de type "tressé".

## Patentansprüche

1. Reifen, der mindestens eine radiale Karkassenbewehrung (2) aufweist, die mindestens aus einer Lage aus undehnbaren Verstärkungselementen (2) gebildet ist und in jedem Wulst B an einem Wulstkern (1) verankert ist, um einen Umschlag (20) zu bilden, wobei jeder Wulst B durch mindestens eine zusätzliche, aus Metallelementen gebildete Verstärkungsbewehrung (6) verstärkt ist, und wobei der nicht umgeschlagene Teil der Karkassenbewehrung (2) im Bereich des Wulstes, der beiderseits des Wendepunktes gelegen ist, wo sich der Verlauf ihres Meridianprofils in der Krümmung ändert, um geradlinig oder konkav zu werden, mindestens axial auf der Innenseite durch eine zusätzliche Verstärkungsbewehrung (6A) aus mindestens einer Lage (6A) verstärkt ist, die aus Metall-Verstärkungselementen gebildet ist, deren radial unteres Ende radial unter der Geraden D' liegt, die parallel zur Drehachse verläuft und durch den Punkt der Umhüllungsschicht (10) des Verankerungswulstkernes (1) läuft, der radial am weitesten von der Drehachse entfernt ist, aber über der Geraden D, die parallel zur Drehachse verläuft und durch den Punkt der Umhüllungsschicht (10) des Verankerungswulstkernes (1) läuft, der radial der Drehachse nächstgelegen ist, und deren radial oberes Ende in einem radialen Abstand von der Geraden D gelegen ist, der zwischen einem Betrag gleich dem radialen Halbabstand zwischen den Geraden D und D", der um den radialen Halbabstand zwischen den Geraden D und D' erhöht ist, und einem Betrag gleich dem Halbabstand zwischen den Geraden D und D", verringert um den radialen Halbabstand zwischen den Geraden D und D' liegt, mit D" als Gerade der größten axialen Breite, **dadurch gekennzeichnet, daß** die Verstärkungselemente der zusätzlichen Bewehrung Stücke oder Gruppen aus Stücken von Umfangsseilen sind, mit einer Umfangslänge, die zwischen dem 0,2- und 0,4-fachen der Umfangslänge der Verstärkungsbewehrung (6A) liegt, gemessen beim Auflegen der genannten Lage.

2. Reifen nach Anspruch 1, **dadurch gekennzeichnet, daß** die Umfangs-Spalte oder -Schnittstellen zwischen den zugeschnittenen Stükken zueinander versetzt sind.

3. Reifen nach einem der Ansprüche 1 bis 2, **dadurch gekennzeichnet, daß** mindestens ein Wulst B durch eine zweite, zusätzliche Verstärkungsbewehrung (6B) verstärkt ist, die axial auf der Außenseite des Umschlags (20) der Karkassenbewehrung (2) gelegen ist und aus mindestens einer Lage (6B) zusammengesetzt ist, die aus metallischen Verstärkungselementen gebildet ist, die zur Umfangsrichtung einen Winkel bilden, der zwischen 0° und 30° liegen kann, wobei der Wert von 0° in den betrachteten Bereich mit eingeschlossen ist.

4. Reifen nach Anspruch 3, **dadurch gekennzeichnet, daß** die Lage(n) (6B) aus durchgehenden Metallelementen aus Stahl gebildet ist bzw. sind, die zur Umfangsrichtung einen größeren Winkel als 0° bilden.

5. Reifen nach einem der Ansprüche 1 bis 4, **dadurch gekennzeichnet, daß** der Verankerungswulstkern (1) der Karkassenbewehrung (2) der Art nach ein "geflochtener" Wulstkern ist.

## Claims

1. A tyre, comprising at least one radial carcass reinforcement (2) which is formed of at least one ply of inextensible reinforcement elements (2) and is anchored within each bead B to a bead wire (1) to form an upturn (20), each bead B being reinforced by an additional reinforcement armature (6) formed of metal elements, the non-upturned part of the carcass reinforcement (2), in the region of the bead located on either side of the point of inflection where the trace of its meridian profile changes curvature to become rectilinear or concave, being reinforced, at least axially to the inside, by an additional reinforcement armature (6A) consisting of at least one ply (6A) formed of metal reinforcement elements, the radially lower end of which is radially below the straight line D' which is parallel to the axis of rotation and passes through that point of the coating layer (10) of the anchoring bead wire (1) which is radially farthest from the axis of rotation, but above the straight line D which is parallel to the axis of rotation and passes through that point of the coating layer (10) of the anchoring bead wire (1) which is radially closest to the axis of rotation, and the radially upper end of which is located at a radial distance from the straight line D which is between a quantity equal to half the radial distance between the straight lines D and D" increased by half the radial distance between the straight lines D and D' and a quantity equal to half the radial distance between the straight lines D and D" reduced by half the radial distance between the straight lines D and D', the straight line D" being the straight line of greatest axial width, **characterised in that** the reinforcement elements of the additional armature are lengths or assemblies of lengths of circumferential cables, of a circumferential length of between 0.2 and 0.4 times the circumferential length of the reinforcement armature (6A), measured upon the laying of said ply.

2. A tyre according to Claim 1, **characterised in that** the circumferential gaps or cuts between cut lengths are offset from each other.

3. A tyre according to one of Claims 1 to 2, **characterised in that** at least one bead B is reinforced by a second additional reinforcement armature (6B), located axially to the outside of the upturn (20) of the carcass reinforcement (2), composed of at least one ply (6B) formed of metal reinforcement elements forming with the circumferential direction an angle which may be between 0° and 30°, the value of 0° being included in the range in question.

4. A tyre according to Claim 3, **characterised in that** the ply (plies) (6B) is (are) formed of continuous metal elements made of steel, which form an angle greater than 0° with the circumferential direction.

5. A tyre according to one of Claims 1 to 4, **characterised in that** the anchoring bead wire (1) of the carcass reinforcement (2) is a bead wire of "braided" type.
